# EUROPEAN PATENT SPECIFICATION

(11) **EP 0 470 234 B1**
(45) Date of publication and mention of the grant of the patent: **14.12.1994**
(21) Application number: 91905170.6
(22) Date of filing: 25.02.1991
(51) Int. Cl.: G01B 5/00

(54) **CONTACT PROBES**
KONTAKTMESSTASTER
SONDES DE CONTACT

(30) Priority: 23.02.1990 GB 9004117
(43) Date of publication of application: 12.02.1992
(73) Proprietor: Renishaw plc, Wotton-Under-Edge Gloucestershire GL12 8JR (GB)
(72) Inventor: McMURTRY, David Roberts, Gloucestershire GL12 7EF (GB)
(74) Representative: Jackson, John Timothy
(86) International application number: PCT/GB91/00293
(87) International publication number: WO 91/13316

(56) References cited:
- GB-A- 2 047 133
- US-A- 4 187 614
- US-A- 4 462 162
- US-A- 4 813 151

## Description

### Field of the Invention

This invention relates to contact probes for use on position determining apparatus such as coordinate measuring machines or machine tools. It finds use both in touch trigger probes, and also in analogue (or measurement or scanning) probes.

### Description of Prior Art

Contact probes generally comprise a fixed member such as a housing, for attachment to the position determining apparatus so that the probe can be moved relative to a workpiece. A stylus having a tip for contacting a workpiece extends from the fixed member or housing. The stylus is supported in the fixed member by a support arrangement which permits it to deflect upon contact with the workpiece. This allows the probe to be driven towards the workpiece without damage, since the deflection of the stylus permits the probe to "overtravel" beyond the point at which the stylus contacts the workpiece. In an analogue or measurement or scanning probe, the housing contains measuring devices which measure the amount of the displacement of the stylus. In a trigger probe, on the other hand, a trigger signal is generated when the stylus contacts the workpiece.

U.S. Patents 4,462,162 and 4,813,151 are examples of such probes, having the features mentioned in the preamble of the appended claim 1.

In both trigger and analogue probes, it is increasingly becoming desirable to use sensors or other deformable members which are liable to damage if they are stressed excessively or caused to deform or strain beyond certain limits, e.g. as a result of excessive overtravel.

### Summary of the Invention

The present invention consists in a protection device according to the characterising part of claim 1, which helps to limit such undesired stresses or strains or deformations.

### Brief Description of the Drawings

Preferred embodiments of the present invention will now be described by way of example, with reference to the accompanying drawings, wherein:
Fig 1 is a vertical cross-section through a first probe according to the invention;
Fig 2 is a horizontal cross-section on the line II-II in Fig 1;
Fig 3 is a vertical cross-section through a second probe according to the invention; and
Fig 4 is a perspective view of a stylus changer module in the probe of Fig 3.

### Description of Preferred Embodiments

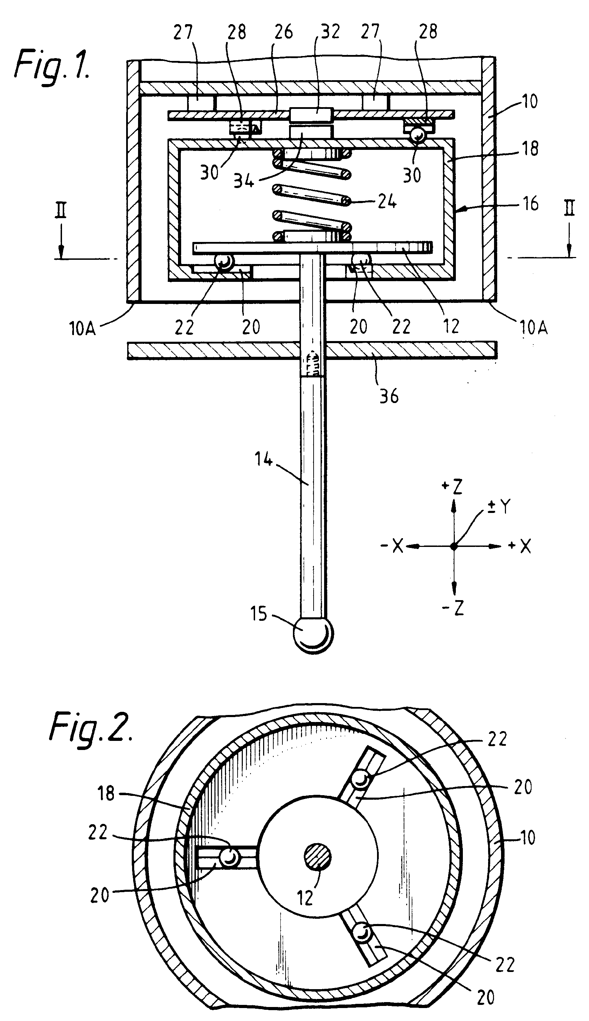

Referring firstly to Fig 1, the first probe embodiment comprises a fixed member in the form of a housing 10, and a movable stylus holding member 12. The housing 10 can be attached to position determining apparatus such as a coordinate measuring machine or machine tool, which can then move the probe relative to a workpiece to be measured. A stylus 14 extends from the housing 10 and is attachable to the stylus holding member 12, and has a workpiece-contacting tip 15. The stylus holding member 12 is located within a module 16 within the housing 10, and the module 16 provides for the necessary overtravel when the stylus 14 is deflected by contacting a workpiece, in any horizontal direction, ±X, ±Y, and in the vertical direction +Z.

The module 16 comprises a relatively fixed part 18, within which the stylus holding member 12 is located in a rest position on a kinematic mount. A kinematic mount provides a very precisely defined rest position, as is well known. Various forms of kinematic mount are known in the art, and may be used. For example, some forms are described in US Patent 4,153,998. In the present embodiment, as seen in Figs 1 and 2, the kinematic mount comprises three radially-extending V-grooves 20 in the relatively fixed module part 18. These grooves are open in the upwards direction, and are spaced at 120° apart from each other around the vertical axis of the probe. The underside of the stylus holding member 12 has three corresponding balls 22 affixed thereto. The balls 22 are biased into their respective V-grooves 20 by a compression spring 24 acting between the stylus holding member 12 and the part 18.

In normal use of the probe, when the stylus tip 15 contacts the workpiece in any horizontal direction, the stylus 14 and the stylus holding member 12 tilt about at least one of the balls 22, and one or two of the other balls disengage from their respective V-grooves 20. This provides for the necessary overtravel of the probe without causing damage in normal circumstances. Likewise, the stylus 14 and stylus holding member 12 can be deflected bodily upwards (in the +Z direction) when the probe is brought vertically downwards onto a workpiece. In this case, all the balls 22 disengage from their respective V-grooves 20. When the probe is again moved so that the stylus no longer contacts the workpiece, the stylus holding member 12 is returned to its original precisely defined rest position within the module 16 under the action of the bias provided by the spring 24.

The module 16 is mounted to a plate, board or wafer 26 within the housing 10, which contains appropriately sensitive sensors and which may also if desired carry electronic circuits which are associated with the sensors, e.g. to develop a trigger signal each time the stylus tip 15 contacts a workpiece. Suitably, the sensors are sensitive to minute strains or deformations which are transmitted through the module 16 and the plate or board 26 to the fixed housing member 10 whenever such contact occurs, and the trigger signal is generated whenever the outputs of such strain sensors exceed a predetermined trigger threshold. The sensors may for example be strain gauges mounted on the plate 26, or on pillars 27 by which the plate 26 is mounted to the housing 10, as described in US Patent 4,813,151. Alternatively, the board or wafer 26 may be a hybrid integrated circuit, including semiconductor strain gauge elements and the associated electronic circuits. Such a hybrid integrated circuit may be fabricated using thick film technology.

The mounting between the module 16 and the plate, board or wafer 26 takes the form of another kinematic mount. Again, any of the well known forms of kinematic mount may be used, but in the example shown here three radially-extending V-grooves are provided on the underside of the board 26, spaced at 120° intervals around the axis of the probe. Balls 30 are fixed to the upper side of the module 16 and locate in respective ones of the V-grooves 28. This ensures that the module 16 has a precisely defined rest position relative to the housing 10, and together with the kinematic mount of the stylus holding member 12 within the module 16, the precisely defined rest position of the stylus 14 relative to the housing 10 is assured. The balls 30 are biased into the V-grooves 28 by means of a permanent magnet 32 provided on the plate 26, which attracts a soft iron striker plate 34 on the upper surface of the module 16. However, it will be appreciated that other bias means may be provided, e.g. a tension spring.

The stylus holding member 12 is provided with a horizontally extending flange 36. When the stylus 14 is in its rest position, this flange 36 is located under a bottom annular edge 10A of the housing 10, spaced apart from the edge 10A by a gap. This gap is of sufficient size so that the flange 36 does not interfere with the normal operation of the probe described above. However, the flange 36 is useful should a collision accidentally arise in which the movement of the probe is not braked when the stylus 14 hits a workpiece as the probe travels towards that workpiece, e.g. because of faulty programming of a computer which controls the movement of the probe. In such a collision, the flange 36 acts to protect the fragile plate, board or wafer 26 and the sensitive components located on it.

Where such a collision occurs while the probe is travelling horizontally, at first the stylus holding member 12 tilts as described above. During this normal tilting, the spring 24 gives way and limits the loading on the plate 26. When the tilting becomes excessive, the flange 36 touches the bottom edge 10A of the housing 10 at one point, and loading then occurs directly between the flange 36 and the housing 10. As the probe overtravels further, the entire module 16 starts to tilt about one or two of the balls 30, and the other ball or balls 30 disengage from their respective V-grooves 28. As such excessive tilting continues, the striker plate 34 moves away from the magnet 32, so that the magnet 32 is no longer able to hold the module 16 in place. The module 16 and the attached stylus 14 then simply fall out of the housing 10, and damage to the fragile (and expensive) board or plate 26 is avoided.

If the collision with the workpiece occurs vertically, in the +Z direction, then as described above the stylus holding member 12 lifts bodily within the module 16. Again, the stress on the on the board or plate 26 is limited by the spring 24. When the overtravel becomes excessive, the flange 36 again contacts the bottom edge 10A of the housing. In this case, tilting of the module 16 is not possible but nevertheless all the loading is taken between the flange 36 and the housing 10, and excessive loading of the plate 26 is avoided. Inevitably, the stylus 14 will be damaged, but this is a cheap, easily replaceable item when compared with the board 26.

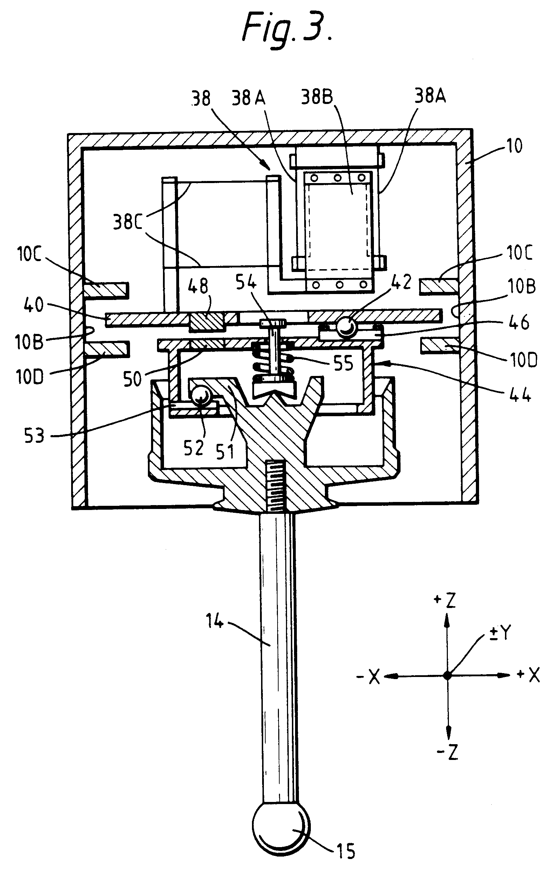

Reference will now be made to Fig 3 which shows an analogue (or measurement or scanning) probe. As previously, this probe comprises a housing or fixed member 10 which is attachable to a position determining apparatus, and includes a stylus 14 extending from the housing, which terminates in a workpiece-contacting stylus tip 15. Within the housing 10 there is a suspension system 38 for a base plate 40, comprising three pairs of parallel leaf springs forming three respective series-connected spring parallelograms. One pair of leaf springs 38A is connected at one end to the housing, and permits translation of the base plate 40 in the ±X directions. Connected to the spring parallelogram 38A is the second pair of leaf springs 38B (only one of which can be seen in Fig 3), which provides for translational movement of the base plate 40 in the ±Y directions. Finally, connected between the spring parallelogram 38B and the base plate 40 is the third pair of leaf springs 38C, which provides for movement of the base plate in the ±Z directions. The base plate 40 supports the stylus 14 as will be described below. The system 38 includes a transducer (not shown) for each of the three axes of movement, X,Y,Z, giving an instantaneous analogue or digital readout of the position of the stylus 14 relative to the housing 10. Other suspension and transducer arrangements which can be used in place of the system 38 are well known, and examples are shown in, for example, US Patent 4,084,323 and in International Patent Specification WO 90/04149.

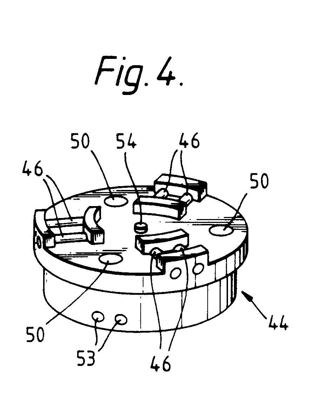

The underside of the plate 40 is provided with three balls 42, spaced apart at 120° intervals around the axis of the probe, only one of which can be seen in Fig 3. A stylus changer module 44 (also shown in Fig 4) has three pairs of cylinders 46, the cylinders of each pair lying side by side and extending radially, and the pairs being spaced apart by 120° around the axis of the probe so as to correspond with the locations of the balls 42. The balls 42 and rollers 46 thus form a kinematic mount for the stylus changer module 44, locating it in a precise rest position on the base plate 40 so that the measurements made by the transducers in the suspension system 38 are an accurate measure of the position of the stylus 14. The balls 42 are urged into the cylinders 46 by three permanent magnets 48 in the base plate 40, which attract three corresponding soft iron striker plates 50 in the upper surface of the module 44.

Within the stylus changer module 44 there is a bayonet-type stylus changer which is described in detail in International Patent Specification WO 89/05210. Briefly, the top end of the stylus 14 which is to be exchanged has three radial arms 51 (only one of which can be seen in Fig 3), each arm carrying a ball 52. Each ball 52 is urged into a radial V-groove formed between a pair of cylinders 53 within the module 44, by the action of a captive plunger 54 biased by a compression spring 55. The stylus can be removed and replaced as described in WO 89/05210, by lifting it up and rotating it within the module 44.

In ordinary use of the probe of Fig 3, the kinematic mounts 42,46 and 52,53 remain engaged. Contact between the stylus tip 15 and a workpiece causes translational movements in the six directions ±X, ±Y, ±Z of the base plate 40. These translational movements are accommodated and measured by the suspension system 38.

However, the leaf springs in the suspension system 38 are deliberately made with a low spring rate so that the gauging forces between the stylus and the workpiece are low. As a result, these leaf springs are rather fragile, and it is desired to protect them. This is achieved by providing stops or abutments to limit the permissible movement of the base plate 40. In the ±X and ±Y directions, the movement is limited by one or more of the edges of the plate 40 coming into contact with the housing 10 e.g. at locations 10B. To limit the ±Z movements of the base plate 40, the housing 10 has inwardly facing lugs or flanges 10C,10D, above and below the edge of the plate 40. Thus, in the event of excessive overtravel in any direction, the plate 40 comes into contact with one of the locations 10B,10C,10D and is thus prevented from moving further. The force of any collision is thus taken directly between the plate 40 and the housing 10, and is not transmitted through the fragile suspension system 38, and thus cannot cause damage to the suspension system.

Once the further movement of the plate 40 has been limited in this manner, further deflection of the stylus 14 is permitted (in any horizontal direction) by tilting of the stylus within the stylus changer module 44, the kinematic mount 52,53 disengaging against the action of the spring 55. If the overtravel continues, eventually this tilting action is brought to an end when one of the arms 51 touches the upper inside surface of the module 44. Further tilting movement of the stylus 14 is now permitted by disengagement between one or more of the balls 42 and its pair of cylinders 46, and the module 44 falls away from the plate 40, in a similar manner to the Fig 1 embodiment.

If there is excessive stylus deflection in the +Z direction (upwards), after the base plate has hit the lug or flange 10C, then the arms 51 lift vertically straight upwards within the module 44, until they hit the inside upper surface of the module. If overtravel continues further, any damage is restricted to the cheap and easily replaceable stylus 14.

In the event of excessive stylus deflection in the -Z direction (downwards), then after the plate 40 has hit the lug or flange 10D, the balls 42 disengage straight away from the cylinders 46, against the attraction of the magnets 48. The entire stylus changer module 44 with the stylus 14 drops harmlessly out of the housing 10.

## Claims

1. A contact probe for position determination apparatus, comprising:
a fixed member (10) for attachment to the apparatus, the fixed member having an axis;
a movable member (12,40,44) for carrying a workpiece-contacting stylus (14), the stylus being supportable from the fixed member via a support path which includes the movable member;
a fragile or deformable member (26,27,38) located in said support path between the fixed member and the movable member; the fragile or deformable member including sensing means which provides an output when the stylus contacts a workpiece; and
support means, also located in said support path, the support means comprising at least one pair of disengageable elements (20,22,52,53) which are connected, at least indirectly, one to the fixed member and the other to the stylus; and bias means (24,55) for biasing said disengageable elements into engagement; whereby the stylus is deflectable towards the fixed member in the axial direction by disengagement of said disengageable elements, against the bias of the bias means, when an axial force is applied to the stylus;
characterised by:
abutment means (36,40) on the movable member, which is contactable with a portion (10A,10B-10D) of the fixed member, for limiting the travel of the stylus towards the fixed member in the axial direction and providing an alternative load path between the movable member and the fixed member when in contact, thereby limiting the force applied through the fragile or deformable member when the stylus is deflected.

2. A probe according to claim 1, including a further support means, located in said support path, the further support means comprising:
at least one pair of further disengageable elements (28,30,42,46) which are connected, at least indirectly, one to the fixed member and the other to the stylus; and
further bias means (32,34,48,50) for biasing said further disengageable elements into engagement.

3. A probe according to claim 2 wherein, upon excessive transverse deflection of the stylus, said further disengageable elements (28,30,42,46) disengage, after disengagement of the first-mentioned disengageable elements (20,22,52,53).

4. A probe according to claim 2 or claim 3, wherein the bias provided by said further bias means (32,34,48,50) is sufficiently strong that, upon excessive transverse deflection of the stylus, said further disengageable elements (28,30,42,46) only disengage when said abutment means (36,40) contacts said portion (10A,10B-10D) of the fixed member.

5. A probe according to any one of claims 2 to 4, wherein the further bias means comprises a magnet (32,48).

6. A probe according to claim 5 wherein, upon excessive transverse deflection of the stylus, said further disengageable elements (28,30,42,46) disengage such that the movable member is no longer held by the magnet (32,48) and falls freely away.

7. A probe according to any one of claims 2-6, wherein one of said support means forms a stylus changer.

8. A probe according to any one of the preceding claims, wherein the output is a trigger output.

9. A probe according to any one of claims 1-7, which provides an output which is a measure of the displacement of the stylus relative to the fixed member, said fragile or deformable member being a suspension system (38) which permits said displacement.

## Patentansprüche

1. Eine Kontaktsonde für eine Positionsbestimmungsvorrichtung mit:
einem festen Bauteil (10) zur Befestigung an der Vorrichtung, wobei das feste Bauteil eine Achse aufweist;
einem bewegbaren Bauteil (12, 40, 44) zum Tragen eines Werkstückkontakttasters (14), wobei der Taster vom festen Bauteil über einen Halteweg, der das bewegbare Bauteil einschließt, haltbar ist;
einem fragilen oder deformierbaren Bauteil (26, 27, 38), das sich im Halteweg zwischen dem festen Bauteil und dem bewegbaren Bauteil befindet; wobei das fragile oder deformierbare Bauteil ein Wahrnehmungsmittel einschließt, welches einen Ausgang schafft, wenn der Taster ein Werkstück kontaktiert; und
Haltemitteln, die sich ebenfalls im Halteweg befinden, wobei die Haltemittel wenigstens ein Paar von außer Eingriff bringbaren Elementen (20, 22, 52, 53), die wenigstens indirekt verbunden sind, und zwar das eine mit dem festen Bauteil und das andere mit dem Taster; und Vorspannmittel (24, 55) umfassen, um die außer Eingriff bringbaren Elemente in einen Eingriff vorzuspannen; wodurch der Taster auf das feste Bauteil zu in der axialen Richtung durch ein Ausrücken der außer Eingriff bringbaren Elemente gegen die Vorspannung der Vorspannmittel ablenkbar ist, wenn eine axiale Kraft auf den Taster aufgebracht wird;
**gekennzeichnet durch**:
ein Widerlagermittel (36, 40) auf dem bewegbaren Bauteil, welches mit einem Teil (10A, 10B - 10D) des festen Bauteils in Kontakt bringbar ist, um die Bewegung des Tasters auf das feste Bauteil zu in der axialen Richtung zu begrenzen und einen alternativen Belastungsweg zwischen dem bewegbaren Bauteil und dem festen Bauteil zu schaffen wenn in Kontakt, wodurch die durch das fragile oder deformierbare Bauteil aufgebrachte Kraft begrenzt wird, wenn der Taster abgelenkt ist.

2. Eine Sonde nach Anspruch 1
mit einem weiteren Haltemittel, das sich im Halteweg befindet, wobei das weitere Haltemittel umfaßt:
wenigstens ein Paar von weiteren außer Eingriff bringbaren Elementen (28, 30, 42, 46), die wenigstens indirekt verbunden sind, und zwar das eine mit dem festen Bauteil und das andere mit dem Taster; und
weitere Vorspannmittel (32, 34, 48, 50), um die weiteren außer Eingriff bringbaren Elemente in einen Eingriff vorzuspannen.

3. Eine Sonde nach Anspruch 2,
worin auf eine übermäßige transversale Ablenkung des Tasters hin die weiteren außer Eingriff bringbaren Elemente (28, 30, 42, 46) außer Eingriff gelangen, und zwar nach einem Ausrücken der zuerst erwähnten außer Eingriff bringbaren Elemente (20, 22, 52, 53).

4. Eine Sonde nach Anspruch 2 oder Anspruch 3,
worin die durch die weiteren Vorspannmittel (32, 34, 48, 50) geschaffene Vorspannung so stark ist, daß auf eine übermäßige transversale Ablenkung des Tasters hin die weiteren außer Eingriff bringbaren Elemente (28, 30, 42, 46) nur außer Eingriff gelangen, wenn das Widerlagermittel (36, 40) den Teil (10A, 10B - 10D) des festen Bauteils kontaktiertt.

5. Eine Sonde nach einem der Ansprüche 2 bis 4, worin das weitere Vorspannmittel einen Magneten (32, 48) umfaßt.

6. Eine Sonde nach Anspruch 5,
worin auf eine übermäßige transversale Ablenkung des Tasters hin die weiteren außer Eingriff bringbaren Elemente (28, 30, 42, 46) außer Eingriff gelangen derart, daß das bewegbare Bauteil nicht länger durch den Magneten (32, 48) gehalten wird und frei wegfällt.

7. Eine Sonde nach einem der Ansprüche 2 - 6,
worin eines der Haltemittel einen Tasterwechsler bildet.

8. Eine Sonde nach einem der vorhergehenden Ansprüche,
worin der Ausgang ein Auslöserausgang ist.

9. Eine Sonde nach einem der Ansprüche 1 - 7,
welche einen Ausgang schafft, der ein Maß der Verschiebung des Tasters relativ zum festen Bauteil darstellt, wobei das fragile oder deformierbare Bauteil ein Aufhängungssystem (38) ist, welches die Verschiebung gestattet.

## Revendications

1. Sonde de contact pour dispositif de détermination de la position, comprenant:
un élément fixe (10) se fixant au dispositif, l'élément fixe ayant un axe;
un élément mobile (12, 40, 44) pour porter un palpeur contactant la pièce (14), le palpeur pouvant être supporté par l'élément fixe par l'intermédiaire d'un chemin de support qui comprend l'élément mobile;
un élément fragile ou déformable (26, 27, 38) situé dans ledit chemin de support entre l'élément fixe et l'élément mobile; l'élément fragile ou déformable comprenant un moyen détecteur qui fournit un signal de sortie lorsque le palpeur entre en contact avec une pièce; et
un moyen de support, également situé dans ledit chemin de support, le moyen de support comprenant au moins une paire d'éléments désengageables (20, 22, 52, 53) qui sont connectés, au moins indirectement, l'un à l'élément fixe et l'autre au palpeur; et un moyen de rappel (24, 55) pour rappeler lesdits éléments désengageables en position d'engagement; de sorte que le palpeur peut être dévié vers l'élément fixe dans la direction axiale par désengagement desdits éléments désengageables, contre la tension du moyen de rappel, lorsqu'une force axiale est appliquée au palpeur;
caractérisé par:
un moyen de butée (36, 40) sur l'élément mobile, qui peut entrer en contact avec une partie (10A, 10B-10D) de l'élément fixe, pour limiter la course du palpeur vers l'élément fixe dans la direction axiale et fournir un trajet différent pour la charge entre l'élément mobile et l'élément fixe lors de leur contact, ce qui limite ainsi la force exercée par l'intermédiaire de l'élément fragile ou déformable lorsque le palpeur est dévié.

2. Sonde selon la revendication 1, comprenant un autre moyen de support, situé dans ledit chemin de support, le moyen de support supplémentaire comprenant:
au moins une paire d'autres éléments désengageables (28, 30, 42, 46) qui sont reliés, au moins indirectement, l'un à l'élément fixe et l'autre au palpeur; et
un autre moyen de rappel (32, 34, 48, 50) pour rappeler lesdits autres éléments désengageables en position d'engagement.

3. Sonde selon la revendication 2 dans laquelle, lors d'une déviation transversale excessive du palpeur, lesdits autres éléments désengageables (28, 30, 42, 46) se désengagent, après désengagement des éléments désengageables précités les premiers (20, 22, 52, 53).

4. Sonde selon la revendication 2 ou 3, dans laquelle le rappel fourni par ledit autre moyen de rappel (32, 34, 48, 50) est suffisamment fort pour que, lors d'une déviation transversale excessive du palpeur, lesdits autres éléments désengageables (28, 30, 42, 46) ne se désengagent que lorsque ledit moyen de butée (36, 40) entre en contact avec ladite partie (10A, 10B-10D) de l'élément fixe.

5. Sonde selon l'une quelconque des revendications 2 à 4, dans laquelle le moyen de rappel supplémentaire comprend un aimant (32, 48).

6. Sonde selon la revendication 5, dans laquelle, lors d'une déviation excessive du palpeur, lesdits éléments désengageables (28, 30, 42, 46) se désengagent de telle sorte que l'élément mobile n'est plus maintenu par l'aimant (32, 48) et s'éloigne en tombant librement.

7. Sonde selon l'une quelconque des revendications 2-6, dans laquelle ledit moyen de support forme un changeur de palpeur.

8. Sonde selon l'une quelconque des revendications précédentes, dans laquelle le signal de sortie est un signal de sortie de déclenchement.

9. Sonde selon l'une quelconque des revendications 1-7, qui fournit un signal de sortie qui est fonction du déplacement du palpeur par rapport à l'élément fixe, ledit élément fragile ou déformable étant un système de suspension (38) qui permet ledit déplacement.
